# EUROPÄISCHE PATENTSCHRIFT

(11) **EP 1 049 745 B1**
(45) Veröffentlichungstag und Bekanntmachung des Hinweises auf die Patenterteilung: **23.10.2002**
(21) Anmeldenummer: 99904745.9
(22) Anmeldetag: 07.01.1999
(51) Int. Cl.: C09B 67/20, C09B 67/38, C08G 10/00, C08G 14/00, C09D 17/00

(54) **WÄSSRIGE PIGMENTPRÄPARATIONEN**
AQUEOUS PIGMENT PREPARATIONS
PREPARATIONS PIGMENTAIRES AQUEUSES

(30) Priorität: 20.01.1998 DE 19801759
(43) Veröffentlichungstag der Anmeldung: 08.11.2000
(73) Patentinhaber: BAYER AG, 51368 Leverkusen (DE)
(72) Erfinder: NYSSEN, Peter Roger, D-41542 Dormagen (DE); ZARGES, Wolfgang, D-51065 Köln (DE); BRAND, Achim, D-51105 Köln (DE); ROICK, Thomas, D-51375 Leverkusen (DE); GEIGER, Hans Peter, D-51503 Rösrath (DE)
(86) Internationale Anmeldenummer: EP9900033
(87) Internationale Veröffentlichungsnummer: WO99037718

(56) Entgegenhaltungen:
- EP-A- 0 816 406
- DE-A- 2 730 223
- DE-A- 3 231 299
- DE-A- 4 125 458
- US-A- 5 003 034
- DATABASE WPI Week 9005 Derwent Publications Ltd., London, GB; AN 90-019562[05] XP002102518 "COATING COMPOSITION" & JP 01 299875 A (TOYO INK MFG. CO. LTD.) , 4. Dezember 1989
- DATABASE WPI Week 7912 Derwent Publications Ltd., London, GB; AN 79-22982b[12] XP002102519 "Reduction of watercontent of pigment filter cake" & JP 54 020041 A (TOYO INK. MFG. CO. LTD.) , 15. Februar 1979

## Beschreibung

Die Erfindung betrifft wäßrige Pigmentpräparationen, ein Verfahren zu ihrer Herstellung sowie ihre Verwendung zum Pigmentieren natürlicher und synthetischer Materialien.

Wäßrige Pigmentpräparationen sind aus dem Stand der Technik bereits bekannt wie beispielsweise in DE-A 3 231 299, EP-A 816 406 sowie in DE-A 41 25 458.

Diese Pigmentpräparationen weisen jedoch noch gewisse anwendungstechnische Nachteile auf. Die vorliegende Erfindung betrifft nun wäßrige Pigmentpräparationen, enthaltend
a) wenigstens ein Pigment,
b) wenigstens ein Kondensationsprodukt auf Basis von
   A) sulfonierten Aromaten,
   B) Aldehyden und/oder Ketonen und gegebenenfalls
   C) einer oder mehrerer Verbindungen, ausgewählt aus der Gruppe der nicht sulfonierten Aromaten, Harnstoff und Harnstoffderivaten und
c) wenigstens ein Polyetherpolyol mit einem Siedepunkt bei Normaldruck von größer 150°C, insbesondere größer 250°C.

Die Pigmente der erfindungsgemäßen Pigmentpräparationen unterliegen keine Beschränkung. Sie können organischer oder anorganischer Natur sein. Geeignete anorganische Pigmente der Komponente a) sind beispielsweise Oxidpigmente wie Eisenoxide, Titandioxid, Nickeloxide, Chromoxide und Cobaltblau sowie Zinksulfide, Ultramarin, Sulfide der Seltenen Erden, Wismut-Vanadat sowie Ruß, wobei Ruß im Rahmen dieser Anmeldung auch als Pigment betrachtet wird. Insbesondere sind zu nennen saure bis alkalische Ruße nach dem Gas- oder Furnacerußverfahren sowie chemisch oberflächen-modifizierte Ruße, beispielsweise sulfo- oder carboxylgruppenhaltige Ruße.

Geeignete organische Pigmente sind beispielsweise solche der Monoazo-, Disazo-, verlackte Azo-, β-Naphthol-, Naphthol AS-, Benzimidazolon-, Disazokondensations-, Azo-Metallkomplex-, Isoindolinon- und Isoindolin-Reihe, ferner polycyclische Pigmente beispielsweise aus der Phthalocyanin-, Chinacridon-, Perylen-, Perinon-, Thioindigo-, Anthrachinon-, Dioxazin-, Chinophthalon- und Diketopyrrolopyrrol-Reihe. Es kommen auch Mischkristallisate (solid solutions) der genannten Pigmente, Mischungen organischer und/oder anorganischer Pigmente, mit organischen und/oder anorganischen Pigmenten wie beispielsweise Ruß beschichtete Metall-, Glimmer- oder Talkumpigmente, z.B. im CVD-Verfahren mit Eisenoxid beschichtetes Mica (Schichtsilikat) sowie Mischungen der genannten Pigmente untereinander in Betracht. Außerdem sind zu nennen verlackte Farbstoffe wie Ca-, Mgund A1-Lacke von sulfonsäure- und/oder carbonsäuregruppenhaltigen Farbstoffen.

Besonders bevorzugte Pigmente aus der Gruppe der Azo-Metallkomplexpigmente sind Pigmente der Formel (III) oder deren tautomeren Formen 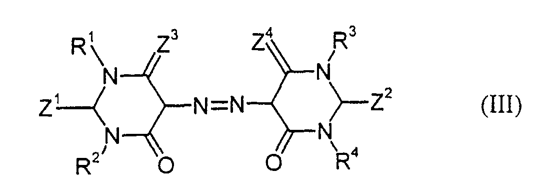 worin
- R¹, R², R³ und R⁴: unabhängig voneinander für Wasserstoff, Alkyl, insbesondere C₁-C₆-Alkyl, Cycloalkyl, insbesondere C₅-C₈-Cycloalkyl, Aryl, insbesondere gegebenenfalls substituiertes Phenyl, Aralkyl, insbesondere C₆-C₁₀-Aryl-C₁-C₄-Alkyl, wie Benzyl oder Ethyl-Phenyl, oder Hetaryl stehen,
- Z¹ bis Z⁴: unabhängig voneinander für O oder NR⁵ stehen und
- R⁵: für Wasserstoff oder Cyan steht.

Besonders bevorzugte Pigmente der Formel (III) entsprechen den Formeln (VIII) und (IX) 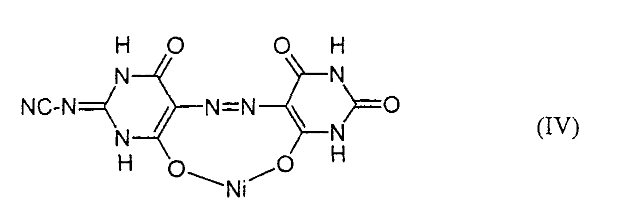 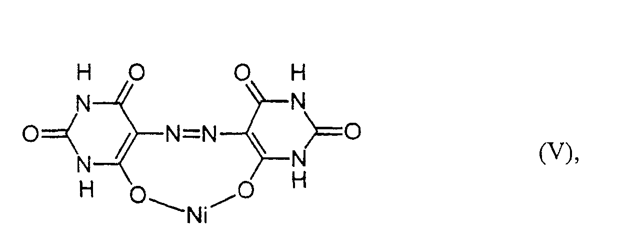 insbesondere in Form ihrer Einschlußverbindungen oder Interkalationsverbindung, wobei die eingeschlossene Verbindung vorzugsweise eine cyclische oder acyclische Verbindung, vorzugsweise Carbonsäure- oder Sulfonsäureamide, Harnstoff oder substituierte Harnstoffe sowie Heterocyclen, insbesondere 2,4,6-Triamino-1,3,5-triazin, Acetoguanamin und Benzoguanamin ist.

Als Salze und Komplexe der Verbindungen der Formel (III) kommen vorzugsweise die Salze und Komplexe der Mono-, Di-, Tri- und Tetraanionen mit den Metallen Li, Cs, Mg, Cd, Co, Al, Cr, Sn, Pb, besonders bevorzugt Na, K, Ca, Sr, Ba, Zn, Fe, Ni, Cu, Mn, in Betracht. Besondere Bedeutungen kommen den Nickelsalzen beziehungsweise -komplexen und deren festen Lösungen, Interkalations- und Einschlußverbindungen zu. Besonders bevorzugt ist eine Einschlußverbindung, Interkalationsverbindung, feste Lösung eines Salzes oder eines Komplexes der Azobarbitursäure, besonders bevorzugt des Azobarbitursäure-Nickel-1:1-Komplexes.

### Kondensationsprodukt der Komponente b):

Auf Basis von bedeutet, daß das Kondensationsprodukt gegebenenfalls aus weiteren Reaktanden neben A, B und gegebenenfalls C hergestellt wurde. Vorzugsweise werden die Kondensationsprodukte im Rahmen dieser Anmeldung jedoch nur aus A, B und gegebenenfalls C hergestellt.

Als sulfonierte Aromaten der Komponente A) werden im Rahmen dieser Anmeldung auch sulfomethylierte Aromaten verstanden. Bevorzugte sulfonierte Aromaten sind: Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl oder Benzolsulfonsäuren.

Als Aldehyde und/oder Ketone der Komponente B) kommen insbesondere aliphatische, cycloaliphatische sowie aromatische in Frage. Bevorzugt sind aliphatische Aldehyde, wobei besonders bevorzugt Formaldehyd sowie andere aliphatische Aldehyde mit 3 bis 5 C-Atomen in Frage kommen.

Als nicht sulfonierte Aromaten der Komponente C) kommen beispielsweise Phenol, Kresol, 4,4'-Dihydroxydiphenylsulfon oder Dihydroxydiphenylmethan in Frage.

Als Harnstoffderivate können beispielsweise Dimethylolhamstoff, Melamin oder Guanidin genannt werden.

Als bevorzugtes Kondensationsprodukt der Komponente b) wird eines auf Basis von
A) wenigstens einem sulfonierten Aromaten, ausgewählt aus der Gruppe von Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl und Benzolsulfonsäuren,
B) Formaldehyd und gegebenenfalls
C) einer oder mehreren Verbindungen, ausgewählt aus der Gruppe von Phenol, Kresol, 4,4'-Dihydroxydiphenylsulfon, Dihydroxydiphenylmethan, Harnstoff, Dimethylolhamstoff, Melamin und Guanidin
eingesetzt.

Das bei der Kondensation bevorzugt erhaltene Kondensationsprodukt besitzt vorzugsweise einen mittleren Kondensationsgrad von 1 bis 150, besonders bevorzugt von 1 bis 20, insbesondere von 1 bis 5.

Die Kondensationsprodukte der Komponente b) können als wäßrige Lösung oder Suspension oder als Feststoff beispielsweise als Pulver oder Granulat, vorzugsweise als sprühgetrocknetes Pulver oder Granulat, eingesetzt werden.

Bevorzugte Kondensationsprodukte der Komponente b) weisen einen anorganischen Salzgehalt von unter 10 Gew.-%, vorzugsweise unter 5 Gew.-%, insbesondere unter 1 Gew.-% auf, bezogen auf die eingesetzte wäßrige Lösung beziehungsweise Suspension der Komponente beziehungsweise bezogen auf den eingesetzten Feststoff der Komponente b).

Ebenfalls bevorzugt ist es, restmonomerenarme bis restmonomerenfreie Kondensationsprodukte der Komponente b) einzusetzen.

Unter "monomerenarm" wird ein Restmonomerengehalt von weniger als 30 Gew.-%, vorzugsweise weniger als 20 Gew.-%, bezogen auf das Kondensationsprodukt, insbesondere < 10 Gew.-%, vorzugsweise < 5 Gew.-%, verstanden. Unter Restmonomeren werden in diesem Zusammenhang, die zur Herstellung des Kondensationsproduktes eingesetzten Reaktanden verstanden.

Derartige salzarme und restmonomerenarme Kondensationsprodukte sind beispielsweise aus EP-A 816 406 bekannt.

Die Kondensationsprodukte der Komponente b) können beispielsweise dadurch hergestellt werden, daß man zunächst die sulfonierten Aromaten der Komponente A) gegebenenfalls im Gemisch mit nicht sulfonierten Aromaten der Komponente C) durch Umsetzung der zugrundliegenden Aromaten mit einem Sulfonisierungsmittel vorzugsweise Schwefelsäure, insbesondere konzentrierte Schwefelsäure, Chlorsulfonsäure, Amidosulfonsäure oder Oleum, herstellt.

Auf 1 mol des der Komponente A) zugrundeliegenden Aromaten werden vorzugsweise 0,4 bis 3,2 mol, insbesondere 0,8 bis 1,6 mol Sulfonierungsmittel eingesetzt.

Anschließend erfolgt die Kondensation mit Aldehyden und/oder Ketonen der Komponenten B), vorzugsweise Formaldehyd, gegebenenfalls zusammen mit weiteren Verbindungen der Komponente C). Die Kondensation erfolgt vorzugsweise in wäßriger Lösung bei einem pH-Wert von 0 bis 9. Hierbei werden vorzugsweise pro Mol des sulfonierten Aromaten A) beziehungsweise pro Mol einer Mischung aus sulfonierten Aromaten der Komponente A) und nicht sulfonierten Aromaten der Komponente C) 0,4 bis 1,5 mol, insbesondere 0,4 bis 1,0 mol der Komponente B) eingesetzt.

Daran schließt sich gegebenenfalls die Neutralisation des sulfonsauren Kondensationsproduktes der Komponente b) mit einer Base an.

Die Abtrennung der anorganischen Säure oder ihrer Salze sowie die Verringerung des Restmonomerengehaltes kann beispielsweise mittels Membrantrennverfahren durchgeführt werden. Als bevorzugte Membrantrennverfahren kommen dabei die Ultrafiltration, die Diffusionsdialyse oder Elektrodialyse in Frage.

Die bei den Membrantrennverfahren vorzugsweise bei der Ultrafiltration eingesetzten Membranen besitzen in einer bevorzugten Ausführungsform ein molecular-weightcut-off (MWCO) von 1 000 bis 50 000 Dalton.

Die Abtrennung der anorganischen Säure mit Hilfe eines Membrantrennverfahrens erfolgt vorzugsweise auf dem Wege der Diafiltration mit säurestabilen Ultra- oder Nanofiltrationsmembranen in Querstromfiltrationsweise. Als geeignete Membranen sind dabei beispielsweise Polyhydantoinmembranen zu nennen, wie sie aus EP-A 65 20 44 bekannt sind.

Bevorzugte Membranen für diesen Zweck besitzen ein MWCO-level von 2 000 bis 20 000 Dalton. Gegebenenfalls wird bei diesem Verfahrensschritt gleichzeitig aufkonzentriert.

Die Verwendung der erfindungsgemäßen beziehungsweise erfindungsgemäß erhaltenen Präparationen als Dispergatoren ist vorzugsweise dadurch gekennzeichnet, daß man zu einer wäßrigen Suspension eines Feststoffes, insbesondere eines Pigments, vorzugsweise organischen Pigment, und/oder Farbstoffes und/oder optischen Aufheller und/oder Pflanzenschutzmittel die erfindungsgemäße beziehungsweise erfindungsgemäß erhaltene Präparation zugibt und die Suspension gegebenenfalls homogenisiert, beispielsweise in einem Naßzerkleinerungsaggregat wie einer Perlmühle.

Dabei werden z.B. niedrig-viskose lagerstabile Dispersionen erhalten, die gegebenenfalls sprühgetrocknet werden.

Zur Herstellung von bevorzugten erfindungsgemäßen Pigmentpräparationen werden eine oder mehrere erfindungsgemäßen Präparationen auf die Oberfläche der Pigmente aufgebracht. Dies kann beispielsweise während oder nach der Pigmentsynthese, bei einem Finishingprozeß, bei der Einarbeitung des Pigmentes in einem Anwendungsmedium oder bei der Herstellung der erfindungsgemäßen Pigmentpräparation (wie oben beschrieben) geschehen.

Die Verwendung der erfindungsgemäßen beziehungsweise erfindungsgemäß erhaltenen Präparationen als Verflüssiger, insbesondere als Betonverflüssiger oder Bohrhilfsmittel ist vorzugsweise dadurch gekennzeichnet, daß man zu einer zu verflüssigenden Suspension oder Feststoff die erfindungsgemäße beziehungsweise erfindungsgemäß erhaltene Präparation, vorzugsweise in einer Menge von 0,1 bis 1,0 Gew.-%, bezogen auf die zu verflüssigende Suspension, gegebenenfalls zusammen mit Wasser zugibt.

Die Verwendung der erfindungsgemäßen beziehungsweise erfindungsgemäß erhaltenen Präparationen als Gerbstoffe ist vorzugsweise dadurch gekennzeichnet, daß man ein gegerbtes Leder, beispielsweise chromgegerbtes Leder (wet blue), in Gegenwart der erfindungsgemäßen beziehungsweise erfindungsgemäß erhaltenen Präparation neutralisiert, nachgerbt, färbt und/oder fettet. Üblicherweise werden diese Verfahrensschritte alle unter dem Begriff "Nachgerbung" zusammengefaßt.

Als Polyetherpolyol-Komponente c) kommen vorzugsweise Homo-, Co- oder Block-Co-Polyetherpolyole in Frage, die vorzugsweise durch Umsetzung von Ethylenoxid und/oder Propylenoxid mit Wasser oder mit niedermolekularen Alkoholen, die mindestens zwei Hydroxygruppen besitzen wie beispielsweise Ethylenglykol, 1,2- oder 1,3-Propandiol, 1,2- oder 1,4-Butandiol, Hexandiol, Glycerin oder Pentaerythrit oder mit niedermolekularen Aminen, die mindestens zwei Aminogruppen mit reaktionsfähigen Wasserstoffatomen tragen, wie Ethylendiamin oder Diethylentriamin, hergestellt werden. Bevorzugte Polyetherpolyole sind Polyalkylenglykole, die ein als Zahlenmittel bestimmtes mittleres Molekulargewicht von 200 bis 11 000 g/mol, insbesondere 200 bis 4 000, besonders bevorzugt 250 bis 1 000 besitzen. Ganz besonders bevorzugt sind Polyethylenglykole und/oder Polypropylenglykole, insbesondere Polyethylenglykole mit einem mittleren Molekulargewicht von 200 bis 800 g/mol sowie Tripropylenglykol.

Bevorzugte erfindungsgemäße Pigmentpräparationen enthalten
- 2 bis 70, insbesondere 10 bis 50 Gew.-% Pigment der Komponente a), insbesondere organisches Pigment, bezogen auf die Präparation,
- 0.1 bis 120, insbesondere 0,2 bis 60 Gew.-% Kondensationsprodukt der Komponente b), bezogen auf Pigment der Komponente a),
- 1 bis 30, vorzugsweise 2 bis 20 Gew.-% Polyetherpolyol der Komponente c), bezogen auf die Präparation sowie
- 29 bis 97 Gew.-% Wasser, bezogen auf die Präparation.

Die bevorzugte Menge des Kondensationsproduktes b) beträgt 0,2 bis 10, insbesondere 0,5 bis 6 mg/m², bezogen auf die spezifische Oberfläche des Pigmentes (B.E.T.) der Komponente a). Die spezifische Oberfläche kann beispielsweise nach der sogenannten BET-Methode bestimmt werden.

Die erfindungsgemäße Pigmentpräparation kann darüberhinaus weitere Zusätze enthalten. Besonders bevorzugt enthält sie als weitere Komponente d) ein nichtionogenes oder aniogenes Dispergiermittel ausgewählt aus der Gruppe:
d1) Sulfobernsteinsäureester, Alkylbenzolsulfonate und sulfatierte, alkoxylierte Fettsäurealkohole oder deren Salze und/oder
d2) Ligninsulfonate nach dem Sulfit- und Kraftverfahren und/oder
d3) Oxalkylierungsprodukte und/oder deren Ester, die durch Anlagerung von gegebenenfalls substituierten Styrolen an gegebenenfalls substituierten Phenolen und Umsetzung mit Ethylenoxid und/oder Propylenoxid erhalten werden.

Als alkoxylierte Fettsäurealkohole der Komponente d1) werden insbesondere solche mit 5 bis 120, vorzugsweise 5 bis 60, insbesondere mit 5 bis 30 Ethylenoxid versehene C₆-C₂₂-Fettsäurealkohole, die gesättigt oder ungesättigt sind, insbesondere Stearylalkohol, verstanden. Besonders bevorzugt ist ein mit 8 bis 10 Ethylenoxideinheiten alkoxylierter Stearylalkohol. Die sulfatierten alkoxylierten Fettsäurealkohole liegen vorzugsweise als Salze, insbesondere als Alkali oder Aminsalze, vorzugsweise als Diethylaminsalz vor.

Als Ligninsulfonate der Komponente d2) kommen solche in Frage, die nach dem Sulfit- oder Kraft-Verfahren gewonnen werden. Vorzugsweise handelt es sich um Produkte, die zum Teil hydrolisiert, oxidiert, propoxyliert, sulfoniert, sulfomethyliert oder desulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht zwischen 1 000 und 100 000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren.

Als bevorzugte Dispergiermittel der Komponente d3) werden Verbindungen der Formel (I) und/oder (II) eingesetzt, wie sie beispielsweise aus DE-A 1 97 12 486 bekannt sind. 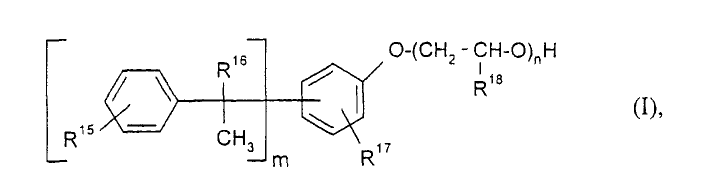 worin
- R¹⁵: Wasserstoff oder C₁-C₄-Alkyl bedeutet,
- R¹⁶: für Wasserstoff oder CH₃ steht,
- R¹⁷: Wasserstoff, C₁-C₄-Alkyl, C₁-C₄-Alkoxy, C₁-C₄-Alkoxycarbonyl oder Phenyl bedeutet,
- m: eine Zahl von 1 bis 4 bedeutet,
- n: eine Zahl von 6 bis 120 bedeutet,
- R¹⁸: für jede durch n indizierte Einheit gleich oder verschieden ist und für Wasserstoff, CH₃ oder Phenyl steht, wobei im Falle der Mitanwesenheit von CH₃ in den verschiedenen -(-CH₂-CH(R¹⁸)-O-)-Gruppen in 0 bis 60 % des Gesamtwertes von n R¹⁸ für CH₃ und in 100 bis 40 % des Gesamtwertes von n R¹⁸ für Wasserstoff steht und wobei im Falle der Mitanwesenheit von Phenyl in den verschiedenen -(-CH₂-CH(R¹⁸)-O-)-Gruppen in 0 bis 40 % des Gesamtwertes von n R¹⁸ für Phenyl und in 100 bis 60 % des Gesamtwertes von n R¹⁸ für Wasserstoff steht.

Ester der Alkoxylierungsprodukte (I) der Formel (II) 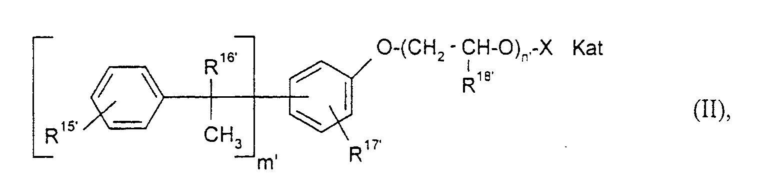 in der
- R^{15'}, R^{16'}, R^{17'}, R^{18'},: m' und n' den Bedeutungsumfang von R¹⁵, R¹⁶, R¹⁷, R¹⁸, m beziehungsweise n, jedoch unabhängig hiervon, annnehmen,
- X: die Gruppe -SO₃⁻, -SO₂⁻, -PO₃⁻⁻ oder -CO-(R¹⁹)-COO⁻ bedeutet,
- Kat: ein Kation aus der Gruppe von H⁺, Li⁺, Na⁺, K⁺, NH₄⁺ oder HO-CH₂CH₂-NH₃⁺ ist, wobei im Falle von X = -PO₃⁻⁻ zwei Kationen vorliegen und
- R¹⁹: für einen zweiwertigen aliphatischen oder aromatischen Rest steht, vorzugsweise für C₁-C₄-Alkylen, insbesondere Ethylen, C₂-C₄- einfach ungesättigte Reste, insbesondere Acetylen oder gegebenenfalls substituiertes Phenylen, insbesondere ortho-Phenylen steht, wobei als mögliche Substituenten vorzugsweise C₁-C₄-Alkyl, C₁-C₄-Alkoxy, C₁-C₄-Alkoxycarbonyl oder Phenyl in Frage kommen.

Die in DE-A 1 97 12 486 genannten Vorzugsformen dieser beiden Verbindungen (I) und (II) sind auch Bestandteil dieser Anmeldung.

Als weitere Komponente e) können beispielsweise polymere Dispergiermittel eingesetzt werden. Als solche sind beispielsweise die Verbindungen, die im Verzeichnis "Water-Soluble Synthetic Polymers: Properties and Behavior" (Volume I + II by Philip Molyneux, CRC Press, Florida 1983/84) genannt sind, anzusehen.

Als weitere polymere Dispergiermittel kommen beispielsweise wasserlösliche sowie wasseremulgierbare Verbindungen in Frage, z.B. Homo- und Copolymerisate, Pfropf- und Pfropfcopolymerisate sowie statistische Blockcopolymerisate.

Besonders bevorzugte polymere Dispergiermittel sind beispielsweise AB-, BAB- und ABC-Blockcopolymere. In den AB- oder BAB-Blockcopolymeren ist das A-Segment ein hydrophobes Homopolymer oder Copolymer, das eine Verbindung zum Pigment sicherstellt und der B-Block ein hydrophiles Homopolymer oder Copolymer oder ein Salz davon und stellt das Dispergieren des Pigmentes im wäßrigen Medium sicher. Derartige polymere Dispergiermittel und deren Synthese sind beispielsweise aus EP-A-518 225 sowie EP-A-556 649 bekannt.

Weitere Beispiele geeigneter polymerer Dispergiermittel sind Polyethylenoxide, Polypropylenoxide, Polyoxymethylene, Polytrimethylenoxide, Polyvinylmethylether, Polyethylenimine, Polyacrylsäuren, Polyarylamide, Polymethacrylsäuren, Polymethacrylamide, Poly-N,N-dimethyl-acrylamide, Poly-N-isopropylacrylamide, Poly-N-acrylglycinamide, Poly-N-methacrylglycinamide, Polyvinylalkohole, Polyvinylacetate, Copolymere aus Polyvinylalkoholen und Polyvinylacetaten, Polyvinylpyrrolidon, Polyvinyloxazolidone, Polyvinylmethyloxazolidone.

Weiterhin sind natürliche polymere Dispergiermittel wie Cellulose, Stärke, Gelatine oder deren Derivate als polymere Dispergiermittel von Bedeutung. Besonders kommen Polymere aus Aminosäureeinheiten z.B. Polylysin, Polyasparaginsäure usw. in Frage.

Als weitere anionische Dispergiermittel sind beispielsweise zu nennen: Alkylsulfate, Ethersulfate, Ethercarboxylate, Phosphatester. Sulfosuccinatamide, Paraffinsulfonate, Olefinsulfonate, Sarcosinate, Isothionate und Taurate.

Die Komponente d) wird vorzugsweise in einer Menge von 0,1 bis 100, insbesondere 0,1 bis 60 Gew.-%, bezogen auf das Pigment der Komponente a) eingesetzt. Vorzugsweise werden sie in einer Menge von 0,1 bis 8, insbesondere 0,1 bis 4 mg/m², bezogen auf die spezifische Oberfläche (bestimmt nach der sogenannten B.E.T.-Methode z.B. durch N₂-Adsorption an Pulverpigment) des Pigmentes der Komponente a) eingesetzt.

Weiterhin können die Pigmentpräparationen weitere für Präparationen dieser Art übliche Zusatzstoffe enthalten, wie z.B. nicht-ionogene oder anionogene Netzmittel, anorganische oder organische Verdickungsmittel oder Thixotropierungsmittel sowie Konservierungsmittel.

Als Konservierungsmittel sind beispielsweise Isothiazolinone beispielsweise 1,2-Benzisothiazol-3-(2H)-on, Chlor-2-methyl-4-isothiazolin-3-on oder 2-Methyl-4-isothiazolin-3-on, Pentachlorphenolnatrium, 1,3,5-Triethylolhexahydro-s-triazin oder Gemische davon zu verstehen, die im allgemeinen in einer Menge von 0 bis 1 Gew.-%, vorzugsweise 0,05 bis 0,5 Gew.-%, insbesondere 0,0001 bis 0,2 Gew.-%, bezogen auf die Präparation, eingesetzt werden.

Die Erfindung betrifft auch ein Verfahren zur Herstellung der erfindungsgemäßen Pigmentpräparationen, das dadurch gekennzeichnet ist, daß man die einzelnen Bestandteile der Präparationen mit Wasser in Naßzerkleinerungsaggregaten homogenisiert. Dabei wird vorzugsweise das Pigment der Komponente a) beispielsweise in Pulver- oder Granulatform oder als wäßrige Suspension beispielsweise als wasserfeuchter Presskuchen zusammen mit wenigstens einem Teil der Komponente b) und c) sowie gegebenenfalls d) und/oder e) und gegebenenfalls weiteren Zusatzstoffen und Wasser, vorzugsweise deionisiertes Wasser, zu einer homogenen Mahlsuspension beispielsweise mittels Rührwerksbütte oder Dissolver als beispielhafte Naßzerkleinerungsaggregate gegebenenfalls in Verbindung mit einer Vorzerkleinerung angeschlagen, d.h. eingebracht und homogenisiert.

Die Mahlsuspension kann außerdem Anteile niedrigsiedender Lösungsmittel (Siedepunkt <150°C) enthalten, die im Verlauf der anschließenden Feinmahlung durch Verdampfung ausgetragen werden können. Sie kann aber auch Anteile höhersiedender Lösungsmittel oder weiterer Zusätze, wie sie oben beschrieben sind z.B. Mahlhilfs-, oder Benetzungsmittel, Verdickungsmittel, enthalten.

Die Naßzerkleinerung umfaßt sowohl die Vorzerkleinerung als auch die Feinmahlung. Vorzugsweise liegt die Pigmentkonzentration der Suspension dabei oberhalb der gewünschten Konzentration der fertigen Pigmentpräparation. Die gewünschte Pigmentendkonzentration wird vorzugsweise im Anschluß an die Naßzerkleinerung eingestellt. Im Anschluß an die Vorzerkleinerung erfolgt eine Mahlung auf die gewünschte Partikelfeinverteilung. Für diese Mahlung kommen Aggregate wie z.B. Kneter, Walzenstühle, Knetschnecken, Kugelmühlen, Rotor-Stator-Mühlen, Dissolver, Korundscheibenmühlen, Schwingmühlen und insbesondere schnelllaufende, kontinuierlich oder diskontinuierlich beschickte Rührwerkskugelmühlen mit Mahlkörpern mit einem Durchmesser von 0,1 bis 5 mm in Frage. Die Mahlkörper können dabei aus Glas, Keramik oder Metall, z.B. Stahl sein. Die Mahltemperatur liegt vorzugsweise im Bereich von 0 bis 250°C, in der Regel jedoch unter 70°C, insbesondere unterhalb des Trübungspunktes der eingesetzten Dispergiermittel der Komponente b) und gegebenenfalls d) und gegebenenfalls weiterer und gegebenenfalls eingesetzter grenzflächenaktiven Mittel.

In einer ebenfalls bevorzugten Verfahrensweise kann die Mahlung teilweise oder vollständig in einem Hochdruckhomogenisator oder in einem sogenannten Strahldispergator (bekannt aus DE-A 19 536 845) erfolgen, wodurch der Gehalt an Mahlkörperabrieb in der Suspension beziehungsweise die Abgabe von löslichen Stoffen aus den Mahlkörpern (z.B. Ionen aus Glaskörpern) auf ein Minimum reduziert beziehungsweise vollständig vermieden werden kann.

Die Endeinstellung der Pigmentpräparation auf die gewünschte Pigmentkonzentration erfolgt vorzugsweise im Anschluß an die Mahlung durch Zusatz von gegebenenfalls weiterem Wasser, gegebenenfalls restlichen Dispergiermittel der Komponente b) oder d) oder e) und gegebenenfalls weitere, beziehungsweise weiteres Polyetherpolyol der Komponente c) sowie gegebenenfalls weitere Zusätze wie beispielsweise Konservierungsmittel. Hierbei wird die erfindungsgemäße Pigmentpräparation vorzugsweise auf einen pH-Wert von 5 bis 9, insbesondere von 6 bis 8 eingestellt.

Im Anschluß an die Naßzerkleinerung und gegebenenfalls Einstellung können die Pigmentpräparationen auch mittels einer Trocknung in ein Pulver oder Granulat überführt werden, beispielsweise durch Sprühtrocknung.

Gegenstand der Erfindung ist weiterhin die Verwendung der Pigmentpräparation zum Pigmentieren und Färben von natürlichen und synthetischen Materialien.

Aufgrund ihrer besonderen Schaumarmut, der ausgezeichneten Feinverteilung, verbunden mit einer hohen Farbstärke und Brillanz (gute Coloristik), insbesondere bei organischen Pigmenten sowie ausgezeichneten rheologischen Eigenschaften und sehr guter Lagerstabilität, können die erfindungsgemäßen Pigmentpräparationen insbesondere zur Herstellung wäßriger Dispersions- und Druckfarben und wäßrige Lacksysteme (z.B. Industrie- und Bautenlacke) verwendet werden.

Insbesondere sind sie zur Einfärbung von Papier in der Masse, für den Papierstrich und zur Einfärbung von Non-Woven und Folien geeignet.

Die erfindungsgemäßen Pigmentpräparationen zeigen bei Verwendung in wäßriger Polyacrylat-, Polyester- und Polyurethansystemen eine sehr gute Verträglichkeit (Flokkulationsstabilität), gute Mischbarkeit und rheologisches Verhalten, hohe Farbstärke und sehr gute coloristische Eigenschaften, insbesondere Brillanz.

Sie sind insbesondere geeignet zum Einfärben, worunter auch Abtönen verstanden wird, von den verschiedenen, in der Praxis anzutreffenden weißen, üblichweise TiO₂ und/oder BaSO₄ enthaltenden Dispersionsanstrichfarben oder -putzen, deren Basis beispielsweise modifizierte Polyvinylacetate, (Poly)acrylate oder (Poly)styrolacrylate oder Latex sein können.

Beispielsweise lassen sie sich leicht und ohne Flokkulation in handelsübliche Außenanstrich-Weißfarben einbringen und ergeben beim Aufziehen und Verstreichen einwandfreie Anstriche mit hoher Farbstärke und Brillanz.

Die Verwendung der erfindungsgemäßen Pigmentpräparationen in wäßrige Bindemittelsysteme (z.B. Dispersionsfarben-, Dispersionsputz-, Druck-, Lack- und Beschichtungssystemen) ist vorzugsweise dadurch gekennzeichnet, daß man die zur Einstellung des beziehungsweise der gemischten Farbtons und Farbstärke erforderliche Menge des oder der erfindungsgemäßen Pigmentpräparation(en) in das wäßrige Bindemittelsystem, in dem gegebenenfalls TiO₂, BaSO₄ oder andere anorganische Weiß- oder Buntpigmente feinteilig dispergiert sind, beispielsweise von Hand oder maschinell mittels z.B. Rührwerksapparaturen einbringt und homogen verteilt, gegebenenfalls zusammen mit weiteren üblichen Zuschlagstoffen, und mittels allgemein bekannter Verfahren wie z.B. Streichen, Spritzen, Rollen, Rakeln, Tauchen die Beschichtung auf den verschiedenen Substraten durchführt.

Darüber hinaus sind die erfindungsgemäßen Pigmentpräparationen für die Verwendung in Drucktinten für den Ink-Jet-Druck sehr gut geeignet.

Der Ink-Jet Druck ist an sich bekannt und erfolgt im allgemeinen so, daß die Drucktinte in ein Aufnahmegefäß eines Tintenstrahl-Druckkopfes gefüllt wird und in kleinen Tröpfchen auf das Substrat gesprüht wird. Der Tintenausstoß in Tröpfchenform erfolgt dabei vorzugsweise über einen piezoelektrischen Kristall, eine beheizte Kanüle (Bubble- oder Thermo-Jet-Verfahren) oder mechanische Druckerhöhung, wobei Druck auf das Tintensystem ausgeübt wird und so Tintentropfen herausgeschleudert werden. Dabei werden die Tröpfchen aus einer oder mehreren kleinen Düsen gezielt auf das Substrat wie z.B. Papier, Holz, Textilien, Kunststoff oder Metall geschossen. Durch elektronische Ansteuerung werden die einzelnen Tröpfchen auf dem Substrat zu Schriftzeichen oder graphischen Mustern zusammengefaßt.

Möglich ist auch ein Verfahren, bei dem mittels elektrostatischer Ablenkung aus einem Tintenstrahl kleinste Volumina in Form von Tropfen auf ein Substrat gebracht werden.

Insbesondere sind die erfindungsgemäßen Pigmentpräparationen geeignet zur Einfärbung, worunter auch die Nuancierung verstanden wird, von Papier in der Masse, Papierstrichfarben sowie Non-woven und Folien, beispielsweise Celluloseacetatfolien.

Die Einfärbung von Papier in der Masse ist vorzugsweise dadurch gekennzeichnet, daß man in einem 1. Schritt beispielsweise Zellstoff oder eine Zellstoffmischung, zusammen mit Wasser, üblichen Füllstoffen wie z.B. anorganische Weißpigmente, Kalziumcarbonat, Kaolin, den erfindungsgemäßen Pigmentpräparationen sowie gegebenenfalls übliche Hilfsmittel wie z.B. Leimungsmittel, Naßfestmittel, Entschäumer in einem geeigneten Aggregat wie z.B. sogenannte Holländer, Pulper oder Mischbütte bei ausreichender Turbulenz aufschlägt, anschließend (Schritt 2) die Stoffmischung durch Zugabe von Wasser, gegebenenfalls weiteren üblichen Hilfsmitteln wie z.B. Naßfestmittel, Retentionsmittel, Mittel zur Einstellung des pH-Wertes weiter verdünnt und im Anschluß daran (Schritt 3) die so erhaltene Stoffmischung dem Stoffauflauf einer Papiermaschine zuführt, auf der die Blattbildung und Trocknung zum gewünschten Papier erfolgt. Die Zugabe der erfindungsgemäßen Pigmentpräparation kann auch im Anschluß an Schritt 1 in der Mischbütte oder in Verbindung mit Schritt 2 erfolgen.

Hierbei zeichnen sich die erfindungsgemäßen Pigmentpräparationen durch ein hervorragendes Retentionsverhalten (hohe Farbausbeute) und geringe Schaumneigung im Verlauf des Herstellverfahrens aus. Selbst bei hohen Einfärbungen von mehr als 10 Gew.-% der Pigmentpräparationen, bezogen auf Zellstoff, ist die Schaumneigung so gering, daß der Einsatz von Entschäumern auf ein Minimum reduziert werden kann.

Die erfindungsgemäßen Pigmentpräparationen besitzen eine hervorragende Dispergier- und Verteilbarkeit in hydrophilen Medien. Weiterhin besitzen sie eine sehr niedrige Antrocknungs- und Austrocknungsneigung in und am Gebinde.

### Beispiel 1

0,95 mol 4,4'-Dihydroxydiphenylsulfon und 1,7 mol sulfoniertes Ditolylether wurden in wäßriger Lösung mit 1,4 mol Formaldehyd kondensiert. Das Kondensationsprodukt wurde bei einem Transmembrandruck von 40 bar und einer Temperatur von 55°C einer Querstromfiltration unterzogen. Eingesetzt wurden dabei Spiralwickelmembranen mit einem MWCO-Level von 3500 g/mol. Durch eine dreimalige kontinuierliche Diafiltration wurde der Schwefelsäuregehalt auf < 0,2 Gew.-% abgesenkt. Bei einer anschließenden Aufkonzentrierung wurde der Wirkstoffgehalt um 60 % erhöht. Der Restmonomerengehalt (4,4'-Dihydroxydiphenylsulfon), bezogen auf die Gesamtmenge an Kondensationsprodukt, nimmt dabei von 15 auf 8 Gew.-% ab.

### Beispiel 2

1 mol Phenolsulfonsäure und 3 mol 4,4'-Dihydroxydiphenylsulfon wurden in wäßriger Lösung bei pH 8 mit 2,4 mol Formaldehyd kondensiert. Bei einem Transmembrandurck von 40 bar und einer Temperatur von 55°C wurde das Kondensationsprodukt einer Querstromfiltration unterzogen, wobei Flachmembranen mit einem MWCO-Level von 3500 g/mol in einem Plattenmodul eingesetzt wurden. Durch eine dreimalige kontinuierliche Diafiltration wurde der Sulfatgehalt auf < 0,2 Gew.-% abgesenkt. Der Restmonomerengehalt (4,4'-Dihydroxydiphenylsulfon + Phenolsulfonsäure) nahm dabei von 14 auf 7 Gew.-% ab.

### Beispiel 3

1 mol 4,4'-Dihydroxydiphenylsulfon wurde mit 1,2 mol Natriumbisulfit und 2,3 mol Formaldehyd sulfomethyliert, das erhaltene Produkt mit Schwefelsäure und auf pH 5 eingestellt und mit 1,5 mol Harnstoff und weiteren 0,65 mol Formaldehyd nachkondensiert. Anschließend wurde das Kondensationsprodukt bei einem Transmembrandruck von 35 bar und einer Temperatur von 35°C einer Querstromfiltration mittels einer Tubularmembran mit einem MWCO-Level von 2000 g/mol unterzogen. Durch dreifache diskontinuierliche Diafiltration wurde der Sulfatgehalt auf < 0,2 Gew.-% gesenkt.

### Beispiel 4

1 mol Naphthalin wurde mit 1,36 mol Schwefelsäure ca. 3 h bei ca. 145°C sulfoniert und das erhaltene Sulfonierungsgemisch ca. 3 h mit 1 mol Formaldehyd bei 120°C kondensiert, abgekühlt auf ca. 50°C und mit Natronlauge auf pH 6 bis 7 gestellt. Anschließend wurde die Lösung bei 50°C und einem Moduleingangsdruck von 30 bar einer Querstromfiltration unterzogen, wobei eine Flachmembran als Membrankissen mit einem MWCO-Level von 3500 g/mol eingesetzt wurde. Durch dreifache Diafiltration wurde der Sulfatgehalt von 11,5 Gew.-% auf < 0,2 Gew.-% gesenkt. Der Restmonomerengehalt, bezogen auf die Gesamtmenge des Kondensationsproduktes, nimmt dabei von 5 auf 1 Gew.-% ab.

### Beispiel 5

0,66 mol 4,4'-Dihydroxydiphenylsulfon und 0,93 mol Naphthalinsulfonsäure wurden mit 0,82 mol Formaldehyd sauer kondensiert. Die Kondensationslösung wurde bei 50°C und 30 bar Moduleingangsdruck einer Querstromfiltration unterworfen, wobei Spiralwickelmembranen mit einer MWCO-Level von 8000 g/mol eingesetzt wurden. Durch zweifache Diafiltration wurde der Schwefelsäuregehalt von 4 auf < 0,2 Gew.-% gesenkt. Der Restmonomerengehalt, bezogen auf die Gesamtmenge des Kondensationsproduktes nahm dabei von 37 auf 19 Gew.-% ab.

### Beispiel 6

1 mol Terphenyl technisch beziehungsweise Terphenyl/Diphenylgemisch wurde mit 3 mol Schwefelsäure sulfoniert, das erhaltene Sulfonierungsgemisch mit 0,67 mol Formaldehyd kondensiert und mit Natronlauge neutralisiert. Das Produkt wurde sprühgetrocknet.

### Beispiel 7

0,38 mol 4,4'-Dihydroxydiphenylsulfon wurde mit Naphthalin-β-sulfosäure, hergestellt aus 1 mol Naphthalin und 1,43 mol Schwefelsäure, gemischt und mit 0,7 mol wäßrigem Formaldehyd kondensiert, mit Natronlauge auf pH ca. 3,5 eingestellt und im Sprühtrockner getrocknet.

### Beispiel 8

1 mol Ditolyletherisomerengemisch wurde mit 2 mol Schwefelsäure sulfoniert und das erhaltene Gemisch von Ditolylethersulfonsäuren mit 1 mol 4,4'-Dihydroxydiphenylsulfon in wäßriger Lösung mit 0,93 mol Formaldehyd kondensiert, mit Natronlauge auf pH ca. 3,5 eingestellt und sprühgetrocknet.

### Beispiel 9

0,3 mol 2-Hydroxybiphenyl wurden mit 0,37 mol Schwefelsäure sulfoniert, mit 0,23 mol Formaldehyd kondensiert und mit Natronlauge auf pH 6 eingestellt und sprühgetrocknet.

### Beispiel 10

### Herstellung eines Dispergiermittels gemäß Formel (II)

In einer mit Stickstoff gespülten 2 1 Rührwerksapparatur wurden
(0,975 mol) 1061 g Tristyrylphenyloxyethylat-Emulgator der Formel (I) 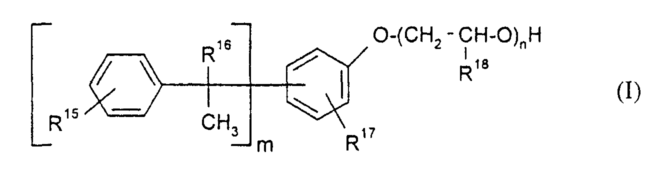 worin
m: 2,7
n: 16
R₂: H
R₁₅: H
R₁₇: H und
R₁₈ : H bedeutet,
mit einer statistischen Kettenlänge von ca. 16 EO-Einheiten vorgelegt und bei 85°C mit
(0,975 mol) 97,5 g Bernsteinsäureanhydrid versetzt.
Man rührte unter schwachem Stickstoffstrom 3 Stunden bei 85°C, wobei die anfangs trübe Suspension dünnflüssiger und klar wurde.
Man kühlte auf 50°C ab und filtrierte über eine G-2 Glasfritte. Es wurden 1.149 g einer viskosen, wasserhellen bis gelblichen Flüssigkeit mit folgenden Eigenschaften gewonnen:

| | |
|---|---|
| pH-Wert 1%ig in vollentsalztem Wasser | = 3,7 |
| Trübungspunkt 1%ig in vollents. Wasser | = 45-46°C |
| Säurezahl | = 47,4mg KOH/g |
| Verseifungszahl | = 95,2-100 % |

Die so erhaltene Mischung besitzt mehr als 90 % des Dicarbonsäurehalbesters gemäß Formel (II).

### Beispiel 6a

Alternativ wurde die Kondensationslösung aus Beispiel 6 vor Zugabe von Natronlauge wie in Beispiel 5 membrantechnisch bearbeitet, wodurch eine schwefelsäurefreie und monomerenarme Präparation erhalten wurde.

### Beispiel 7a

Alternativ wurde die Kondensationslösung aus Beispiel 7 vor Zugabe der Natronlauge wie in Beispiel 5 membrantechnisch bearbeitet, wodurch eine schwefelsäurefreie und monomerenarme Präparation erhalten wurde.

### Beispiel 8a

Alternativ wurde die Kondensationslösung aus Beispiel 8 nach Zugabe der Natronlauge auch bei 55°C und einem Moduleingangsdruck von 30 bar einer Querstromfiltration unterworfen. Zum Einsatz kamen dabei Ultrafiltrationsmembranen als Flachmembranen (MWCO 8000 g/mol), die auf einem Plattenmodul montiert waren. Durch dreifache Diafiltration und abschließende Aufkonzentrierung wurde der Sulfatgehalt von 5.0 auf <0.2% gesenkt.

### Beispiel 9a

Alternativ wurde die Kondensationslösung aus Beispiel 9 nach Zugabe der Natronlauge auch bei 45°C und einem Moduleingangsdruck von 20 bar einer Querstromfiltration unterworfen. Zum Einsatz kamen dabei Ultrafiltrationsmembranen als Flachmembranen (MWCO 3500 g/mol) als Membrankissen. Durch zweifache Diafiltration und abschließende Aufkonzentrierung wurde der Sulfatgehalt von 5.2 auf 0.3% gesenkt.

### Beispiel 11

An einem Laborschnellrührer wurden

| | |
|---|---|
| 53,6 | Gew.-Teile deionisiertes Wasser vorgelegt und unter Rühren |
| 8,2 | Gew.-Teile des Dispergiermittels (Komp. b) gemäß Beispiel 9, |
| 8,0 | Gew.-Teile Polyethylenglykol mit einem mittleren Molekulargewicht von 400 g/mol (PEG 400; Komp. c), |
| 0,2 | Gew.-Teile 1,2-Benzisothiazol-3-(2H)-on als Konservierungsmittel homogen eingetragen und vollständig gelöst. |

### Anschließend wurden

30 Gew.-Teile des Pigmentes Colour Index Pigment Blue 15:3 (B.E.T. = 68 m²/g) eingetragen und vollständig homogenisiert.
Im Anschluß daran wurde die Suspension mittels verdünnter Natronlauge auf einen pH-Wert von 7,0 eingestellt und in einer 11-Laborperlmühle unter Einsatz von Glasperlen mit einem Durchmesser von 0,47-0,63 mm unter Kühlung 60 Minuten gemahlen.
Man erhielt eine 30%ige blaue Pigmentpräparation mit sehr guter Fließfähigkeit und Lagerstabilität, die bei Verwendung in handelsüblichen wäßrigen Dispersionsanstrichsystemen und Lacksystemen hervorragend verträglich ist und sich durch hohe Farbstärke auszeichnet.
Die so erhaltene Pigmentpräparation wurde zur Verwendung in einer Drucktinte für den Ink-Jet-Druck auf eine Pigmentkonzentration von 4% verdünnt, wobei die Zusammensetzung und Parameter der Drucktinte wie folgt gewählt wurden:

| | |
|---|---|
| Deionisiertes Wasser | 72,7 Gew.-% |
| Polyethylenglykol (Mw: 800 g/mol) | 9,0 Gew.-% |
| 30% Pigmentpräparation: | 13,3 Gew.-% |
| 2-Pyrrolidon: | 5,0 Gew.-% |
| pH-Wert | 7,2 |
| Oberflächenspannung: | >30 mN/m |
| max. Teilchengröße (Scheibenzentrifuge): | <0,2 µm. |

Die Drucktine ließ sich auf einem handelsüblichen Tintenstrahldrucker (HP, Desk Jet ® 690 C, nach Austausch der ursprünglich vorhandenen blauen Farbstofftinte durch die erfindungsgemäße Drucktinte) einwandfrei verdrucken und ergab Druckbilder mit hoher Farbstärke und Brillanz, sowie gute Wasser- und Markerechtheit.

### Beispiele 29

Wie in Beispiel 11 beschrieben, wurden weitere vorteilhafte, hochkonzentrierte Pigmentpräparationen unter Verwendung der in Tabelle 1 angegebenen Komponenten hergestellt.

Die Einstellung des pH-Wertes auf den angebenenen Wert erfolgte gegebenenfalls vor der Mahlung durch Zugabe von verdünnter Natronlauge beziehungsweise verdünnter Schwefelsäure. Die Bestimmung der Viskosität erfolgte 24 h nach Fertigstellung der Präparationen an einem Rotationsviskosimeter der Fa. Haake, Typ Viskotester VT 550, Drehkörper E 100. Die Viskositätsangaben beziehen sich auf eine Messung bei Raumtemperatur und einer Schergeschwindigkeit von 70 s⁻¹.

Die Prozentangaben zu den verwendeten Dispergiermitteln (Komp b)) bezeichnen den Feststoffgehalt der jeweiligen wäßrigen Lösung.

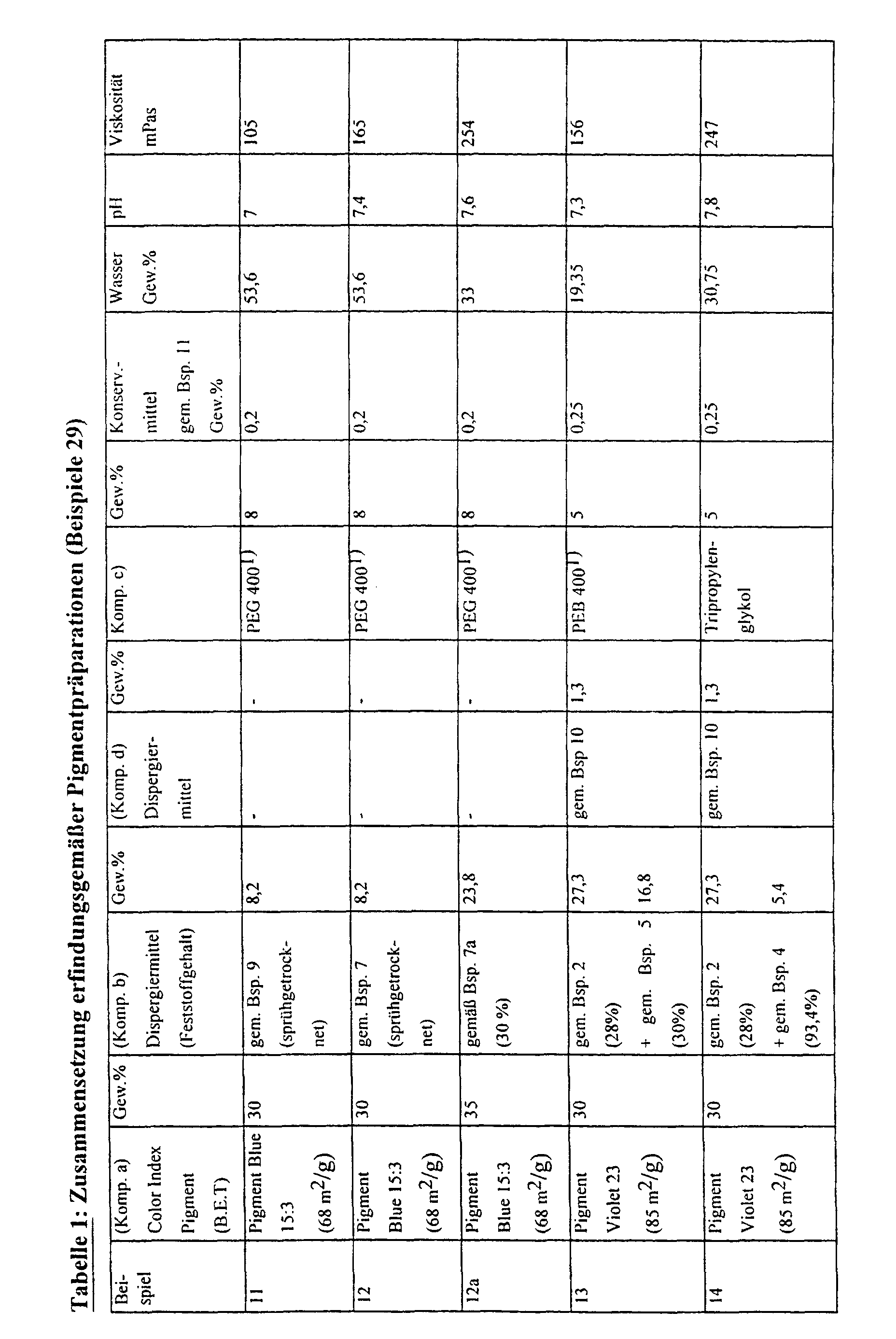

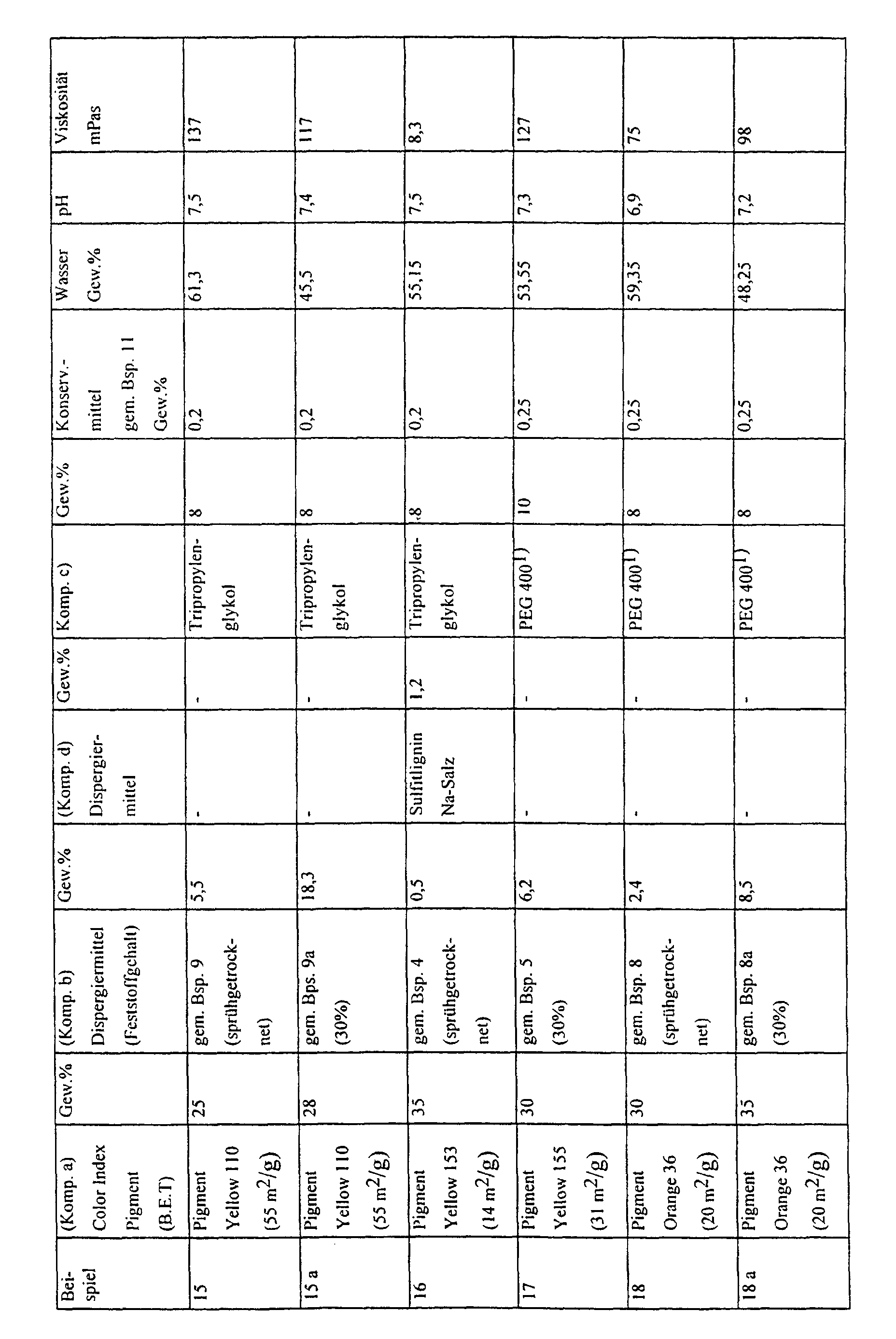

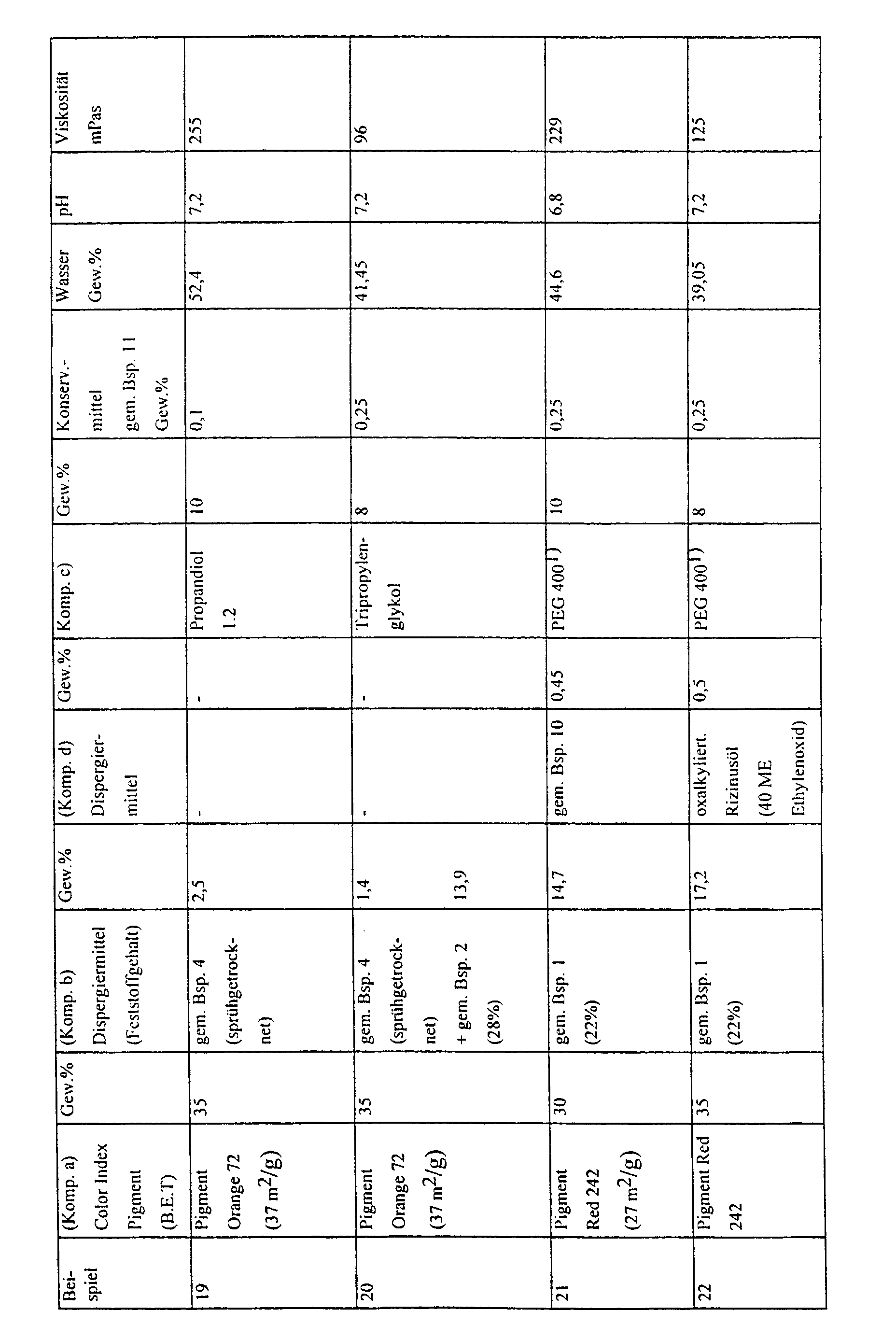

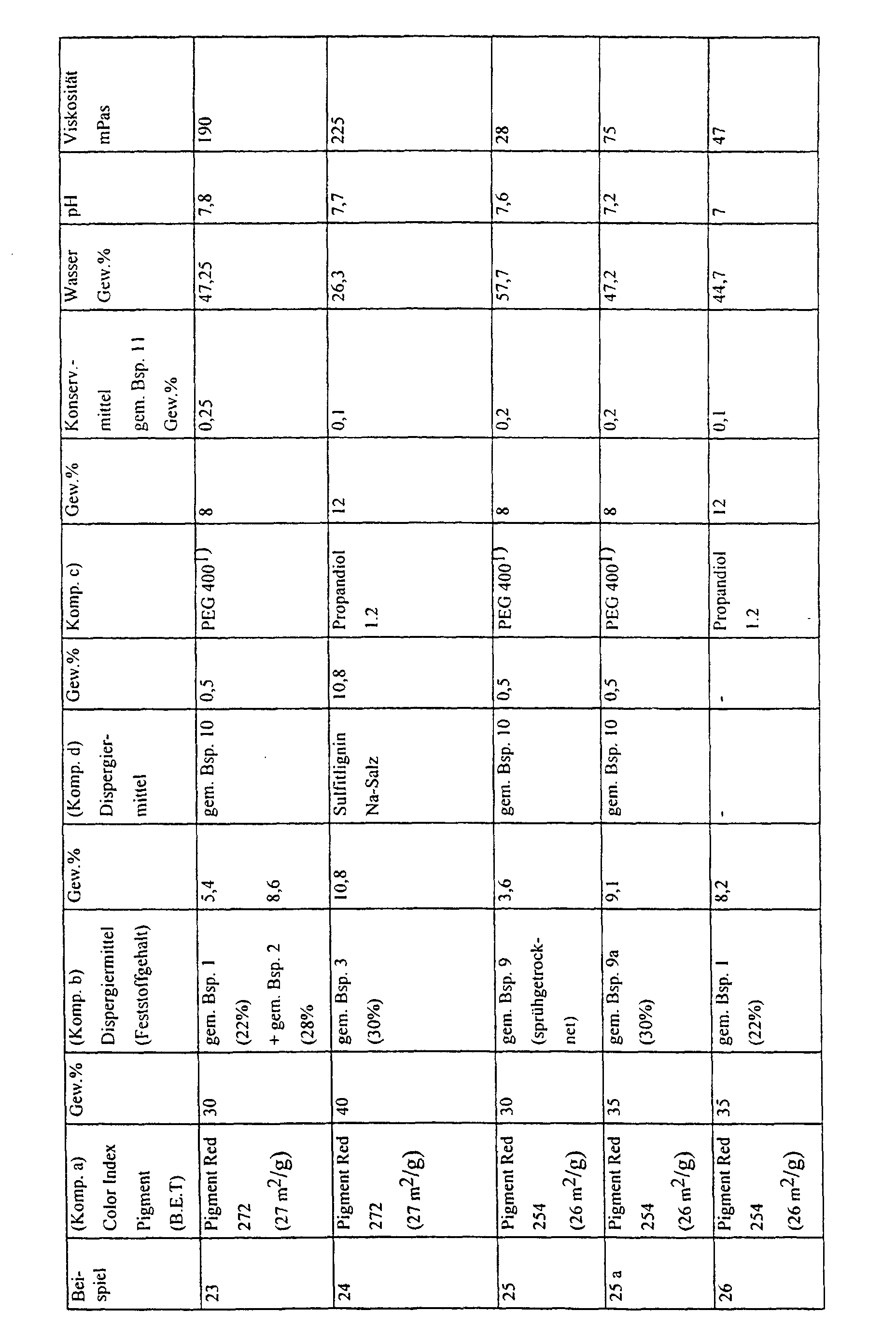

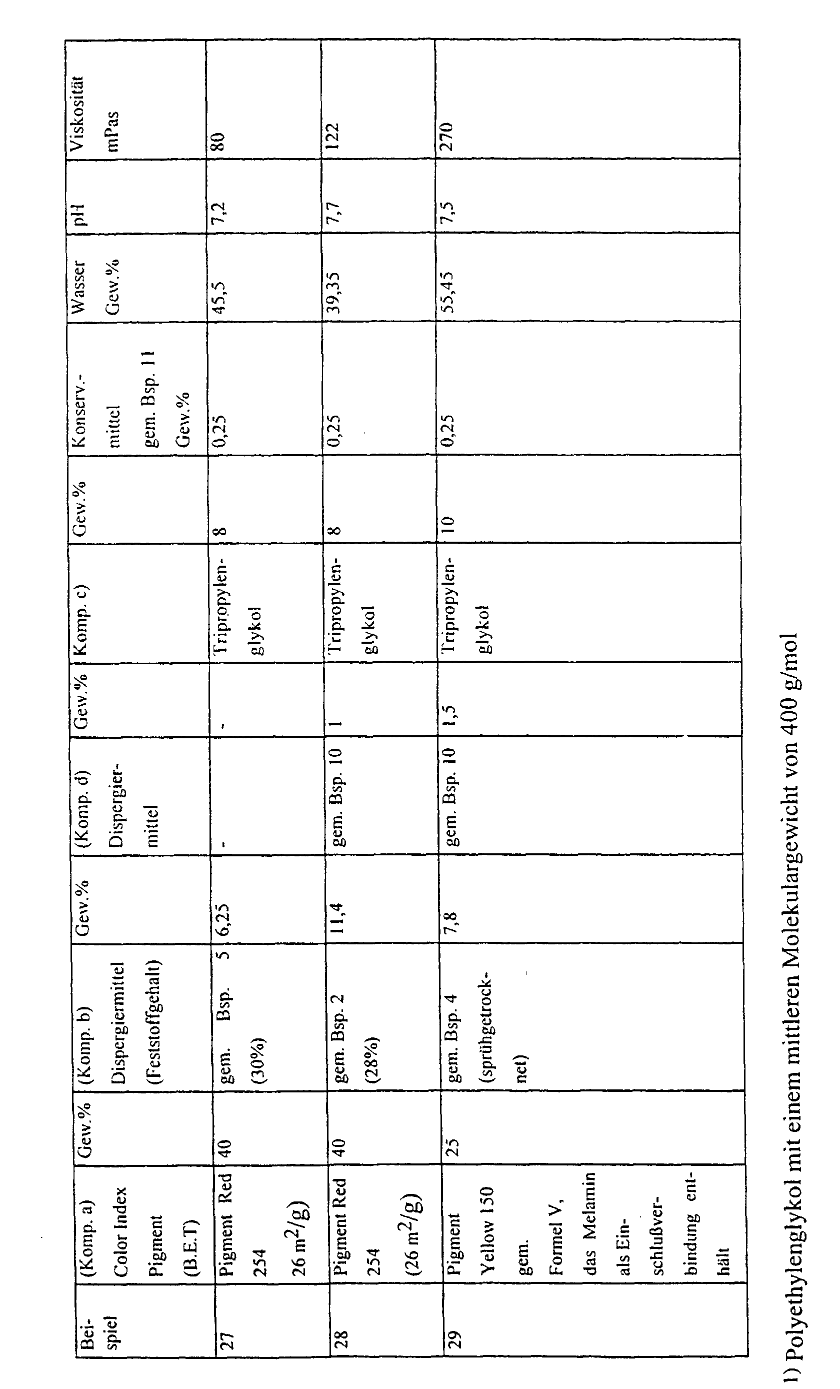

### Prüfung des Schaumverhaltens der erfindungsgemäßen Pigmentpräparationen:

### Prüfmethode:

In einem 100 ml-Glasmeßzylinder wurden 0,8 g der zu prüfenden Pigmentpräparation eingefüllt und mit 80 ml Leitungwasser beziehungsweise deionisiertem Wasser (Edelwasser) aufgefüllt. Anschließend wurde der verschlossene Meßzylinder 20 mal von Hand horizontal geschüttelt und die Schaumhöhe [mm] sofort und nach 2,5, 5 und 10 min visuell ermittelt.

| **Schaumhöhe (mm) nach 10 min** | **Beurteilung** |
|---|---|
| >25 | schäumend |
| 15-25 | schwach schäumend |
| 5-15 | schaumarm |
| 0-5 | schaumfrei |

Alle erfindungsgemäßen Pigmentpräparationen gemäß Beispielen 11-28 sowie 12a, 15a, 18a und 25a konnten als schaumfrei beziehungsweise schaumarm beurteilt werden.

Wie aus Tabelle 2 ersichtlich, nimmt die Schaumhöhe über die Meßeinheit rasch ab, d.h. die Präparationen erfüllen in nahezu allen Fällen das Kriterium "schaumarm" bereits nach 2,5 min.

**Tabelle 2:**

| **Prüfergebnis Schaumverhalten** | | | | | | | | |
|---|---|---|---|---|---|---|---|---|
| | Schaumhöhe in Leitungwasser | | | | Schaumhöhe in Edelwasser | | | |
| Pigment präparation gemäß | sofort (mm) | nach 2,5 min (mm) | nach 5 min (mm) | nach 10 min (mm) | sofort (mm) | nach 2,5 min (mm) | nach 5 min (mm) | nach 10 min (mm) |
| Beispiel 11 | 25 | 4 | 3 | 0 | 28 | 10 | 6 | 3 |
| Beipiel 12 | 18 | 1 | 1 | 0 | 20 | 9 | 8 | 5 |
| Beispiel 14 | 22 | 5 | 3 | 3 | 20 | 17 | 15 | 15 |
| Beispiel 17 | 28 | 11 | 7 | 6 | 26 | 16 | 14 | 9 |
| Beispiel 20 | 5 | 0 | 0 | 0 | 6 | 2 | 1 | 1 |
| Beispiel 21 | 33 | 14 | 11 | 7 | 29 | 9 | 7 | 6 |
| Beispiel 23 | 30 | 19 | 16 | 10 | 35 | 15 | 14 | 9 |
| Beispiel 28 | 15 | 1 | 1 | 0 | 20 | 1 | 0 | 0 |
| Beispiel 29 | 20 | 5 | 3 | 3 | 22 | 8 | 5 | 5 |

### Anwendungsbeispiele 30-38

Die sehr gute Eignung der erfindungsgemäßen Pigmentpräparationen für die Massefärbung von Papier wurde nach folgendem Verfahren geprüft:
a) Herstellung des Papierrohstoffes:
   In einem Laborholländer wurde eine Stoffmischung bestehend aus
   70 Gew.-% gebleichtem Eukalyptuszellstoff
   30 Gew.-% gebleichtem Kiefernsulfatzellstoff
   bei einer Stoffdichte von 3% auf 25°SR in Leitungswasser gemahlen.
b) Blattbildung und Einfärbung
   In einem Färbeglas (1000 ml) wurden 2,5 g des oben gemahlenen Faserstoffes (fest) unter ständigem Rühren in 600 ml Leitungwasser verdünnt und 30 Gew.-% Titandioxid-Pigment (Bayertitan® R-PL-1, Bayer AG) bezogen auf Faserstoff fest, als 10 Gew.-%ige wäßrige Dispersion zugegeben. Nach 10 min Rühren wurde die zur Einstellung einer Richttyptiefe von 1/25 (DIN 54000) benötigte Menge der jeweiligen Pigmentpräparation (siehe unten) zugefügt und nach einer Rührzeit von 5 min. 5 Gew.-% Nadavin®DHF, Bayer AG, bezogen auf Faserstoff, zugegeben. Falls erforderlich, wurde nach weiteren 10 min der pH-Wert auf 6,5-7,0 eingestellt.
   Auf einer Blattbildungsanlage (System Rapid-Köthen®) wurde die Blattbildung durchgeführt und anschließend das Blatt bei ca. 95°C in ca. 8 min. im Trockenschrank getrocknet.
   Die Ermittlung der benötigten Menge der jeweiligen Pigmentpräparation für 1/25 Richttyptiefe erfolgte anhand des oben beschriebenen Verfahrens durch Messung der Farbstärkedifferenz auf einem Meßgerät Typ Macbeth Color Eye 7000 gegen ein coloristisch entsprechendes Textilmuster (1/25 Richttyptiefe), dessen Farbstärke zu 100% gesetzt wurde.
   Nach Ermittlung der für 1/25 Richttyptiefe benötigten Menge der jeweiligen Pigmentpräparation wurden auf einer Laborpapiermaschine analoge Stufenlösungen nach oben genannten Rezepturen gefertigt.
   Diese eingefärbten Rohpapiere wurden auf Lichtechtheit (DIN 54004), Styrol- und Weichmacher-(Dibutylphthalat)echtheit geprüft. Die Bewertung erfolgte nach 24 Stunden Eintauchen der gefärbten Papierstreifen hinsichtlich Ausbluten und evtl. Anfärbung der Lösung.
   Ebenso erfolgte eine Prüfung der Säureechtheit (10%ige Schwefelsäure) und Alkaliechtheit (10%ige Sodalösung) durch Einwirkung eines Tropfens der jeweiligen Lösung über 1 min. auf das gefärbte Papier, Wegnahme des Überschusses mittels Filterpapier und Beurteilung der Papiere in feuchtem Zustand.

### Echtheitsbewertung:

| | |
|---|---|
| gut: | + |
| eingeschränkt: | +/- |
| schlecht: | - |

Die Verwendung der erfindungsgemäßen Pigmentpräparationen ergab sehr farbstarke, brillante Einfärbungen mit ausgezeichneten Echtheiten. Die Prüfergebnisse der Anwendungsbeispiele 30-38 sind in Tabelle 3 zusammengestellt.

| Anwendungsbeispiel | verwendete Pigmentpräparation gemäß | benötigte Menge Pigmeritpräparation für 1/25 Richttyptiefe % / Faserstoff | Lichtechtheit DIN 54004 Stufe | Säureechtheit | Alkaliechtheit | Styrolechtheit | Weichmacherechtheit |
|---|---|---|---|---|---|---|---|
| 30 | Beispiel 11 | 3 | 6-7 | + | + | + | + |
| 31 | Beispiel 12 | 3 | 6-7 | + | + | + | + |
| 32 | Beispiel 14 | 2,2 | 5-6 | + | + | + | + |
| 33 | Beispiel 17 | 3,2 | 7 | + | + | + | + |
| 34 | Beispiel 20 | 3 | 7-8 | + | + | + | + |
| 35 | Beispiel 21 | 4,7 | 7 | + | + | + | + |
| 36 | Beispiel 23 | 3,3 | 8 | + | + | | + |
| 37 | Beispiel 28 | 2,3 | 6-7 | + | + | + | + |
| 38 | Beispiel 29 | 1,8 | 8 | + | + | + | + |

Die erfindungsgemäßen Pigmentpräparationen eigneten sich insbesondere auch zur Einfärbung von sogenannten Dekorlaminatpapieren, wie sie zur Herstellung von Dekorschichtpreßstoffen verwendet werden.

Beispielsweise wurden jeweilige Rohpapiere, hergestellt gemäß Anwendungsbeispiel 30-38 mit einer 50%igen wäßrigen Melaminformaldehyd-Lösung auf einen Harzanteil von ca. 56% beschichtet, im Trockenschrank-Durchlaufverfahren 2,5 min bei 120°C auf eine Restfeuchte von ca. 4-6 Gew.-% vorkondensiert und 5 min bei verschiedenen Temperaturen von 150 bis 180°C und einem Druck von 10 N/mm² auf einer Hochdruckpresse zu einem Laminat verpreßt.

Der Laminataufbau bestand aus:

| | |
|---|---|
| 1 | Preßplatte, verchromt, |
| 2 | gering pigmentierte Underlaypapiere (melaminharzgetränkt) |
| 2 | Natronkraftpapiere (phenolharzgetränkt) |
| 1 | erfindungsgemäß pigmentiertes Dekorpapier (gem. Beispiel 30-38) |
| 1 | Preßplatte, verchromt |

Die erfindungsgemäß pigmentierten Papiere (Dekorpapiere) ließen sich in dem angegebenen Temperaturbereich einwandfrei verpressen und ergaben hoch brillante und farbstarke Laminate. Eine Farbnuancen-Verschiebung bei Verpressung mit 150°C und 180°C konnte nicht festgestellt werden.

### Anwendungsbeispiel 39:

- 3: Gew.-Teile einer Pigmentpräparation, hergestellt gemäß Beispiel 28, wurde von Hand 5 Minuten in
- 100: Gew.-Teile einer handelsüblichen Dispersionsanstrich-Weißfarbe (Tinova® Täcklasur, Fa. Akzo Nobel) homogen eingerührt, und ergaben einen brillanten, farbstarken, flockungsstabilen und stippenfreien Anstrich, der durch weiteres Mischen mittels eines Schnellrührers über 3 min. nicht mehr verbessert werden konnte.

Auch ein 10%-Anstrich ergab ein gleich gutes Eigenschaftsbild.

## Patentansprüche

1. Wäßrige Pigmentpräparationen, enthaltend
a) wenigstens ein Pigment,
b) wenigstens ein Kondensationsprodukt auf Basis von
A) sulfonierten Aromaten,
B) Aldehyden und/oder Ketonen und gegebenenfalls
C) einer oder mehrerer Verbindungen, ausgewählt aus der Gruppe der nicht sulfonierten Aromaten, Harnstoff und Harnstoffderivaten und
c) wenigstens ein Polyetherpolyol mit einem Siedepunkt bei Normaldruck von größer 250°C.

2. Wäßrige Pigmentpräparationen gemäß Anspruch 1, enthaltend als Komponente b) wenigstens ein Kondensationsprodukt auf Basis von
A) wenigstens einem sulfonierten Aromaten, ausgewählt aus der Gruppe von Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl und Benzolsulfonsäuren,
B) Formaldehyd und gegebenenfalls
C) einer oder mehreren Verbindungen, ausgewählt aus der Gruppe von Phenol, Kresol, 4,4'-Dihydroxydiphenylsulfon, Dihydroxydiphenylmethan, Harnstoff, Dimethylolharnstoff, Melamin und Guanidin.

3. Wäßrige Pigmentpräparationen gemäß Anspruch 1, **dadurch gekennzeichnet, daß** das Kondensationsprodukt der Komponente b) einen mittleren Kondensationsgrad von 1 bis 150, insbesondere 1 bis 20, vorzugsweise 1 bis 5, besitzt.

4. Wäßrige Pigmentpräparationen gemäß Anspruch 1, **dadurch gekennzeichnet, daß** der Restmonomerengehalt des Kondensationsproduktes der Komponente b) weniger als 30 Gew.-%, vorzugsweise weniger als 20 Gew.-%, insbesondere weniger als 10 Gew.-%, bezogen auf das Kondensationsprodukt, beträgt.

5. Wäßrige Pigmentpräparationen gemäß Anspruch 1, enthaltend
- 2 bis 70, insbesondere 10 bis 50 Gew.-% Pigment der Komponente a), insbesondere organisches Pigment, bezogen auf die Präparation,
- 0,1 bis 120, insbesondere 0,2 bis 60 Gew.-% Kondensationsprodukt der Komponente b), bezogen auf Pigment der Komponente a),
- 1 bis 30, vorzugsweise 2 bis 20 Gew.-% Polyetherpolyol der Komponente c), bezogen auf die Präparation sowie
- 29 bis 97 Gew.-% Wasser, bezogen auf die Präparation.

6. Wäßrige Pigmentpräparationen gemäß Anspruch 1, enthaltend als Komponente c) Homo-, Co- oder Block-Co-Polyetherpolyole, die durch Umsetzung von Ethylenoxid und/oder Propylenoxid mit Wasser oder mit niedermolekularen Alkoholen, die mindestens zwei Hydroxygruppen besitzen, insbesondere solche, ausgewählt aus der Gruppe von Ethylenglykol, 1,2- oder 1,3-Propandiol, 1,2- oder 1,4-Butandiol, Hexandiol, Glycerin und Pentaerythrit oder mit niedermolekularen Aminen, die mindestens zwei Aminogruppen mit reaktionsfähigen Wasserstoffatomen tragen, insbesondere solche, ausgewählt aus der Gruppe von Ethylendiamin und Diethylentriamin, hergestellt werden.

7. Wäßrige Pigmentpräparationen gemäß Anspruch 1, enthaltend zusätzlich ein nicht-ionogenes oder anionogenes Dispergiermittel der Komponente d) ausgewählt aus der Gruppe
d1) Sulfobernsteinsäureester, Alkylbenzolsulfonate und sulfatierte, alkoxylierte Fettsäurealkohole oder deren Salze und/oder
d2) Ligninsulfonate nach dem sulfit- und Kraftverfahren und/oder
d3) Oxalkylierungsprodukte und/oder deren Ester, die durch Anlagerung von gegebenenfalls substituierten Styrolen an gegebenenfalls substituierten Phenolen und Umsetzung mit Ethylenoxid und/oder Propylenoxid erhalten werden.

8. Wäßrige Pigmentpräparation gemäß Anspruch 1, **dadurch gekennzeichnet, daß** die Komponente a) ein Pigment aus der Gruppe der Azo-Metallkomplexpigmente der Formel (III) ist 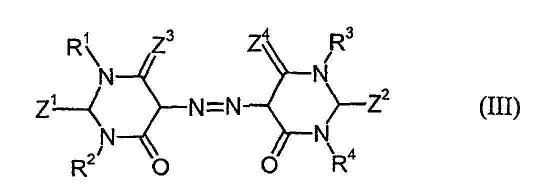 worin
R¹, R², R³ und R⁴ unabhängig voneinander für Wasserstoff, Alkyl, insbesondere C₁-C₆-Alkyl, Cycloalkyl, insbesondere C₅-C₈-Cycloalkyl, Aryl, insbesondere gegebenenfalls substituiertes Phenyl, Aralkyl, insbesondere C₆-C₁₀-Aryl-C₁-C₄-Alkyl, wie Benzyl oder Ethyl-Phenyl, oder Hetaryl stehen,
Z¹ bis Z⁴ unabhängig voneinander für O oder NR⁵ stehen und
R⁵ für Wasserstoff oder Cyan steht,
vorzugsweise der Formeln IV und V 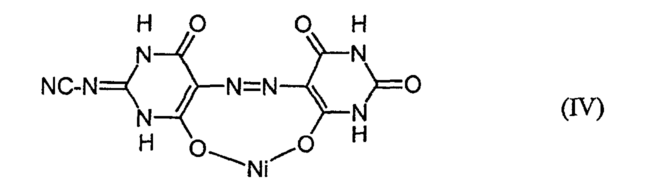 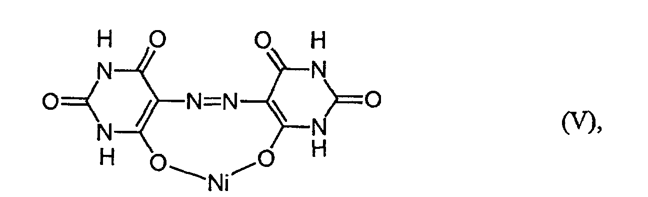 in Form eines Salzes, Komplexes, als feste Lösung, als Einschluß- oder Interkalationsverbindung, wobei die eingeschlossene Verbindung vorzugsweise eine cyclische oder acyclische Verbindung, vorzugsweise Carbonsäure- oder Sulfonsäureamide, Harnstoff oder substituierte Harnstoffe sowie Heterocyclen, insbesondere 2,4,6-Triamino-1,3,5-triazin, Acetoguanamin und Benzoguanamin ist.

9. Verfahren zur Herstellung der wäßrigen Pigmentpräparationen gemäß Anspruch 1, **dadurch gekennzeichnet, daß** man die einzelnen Bestandteile der Präparation zusammen mit Wasser in Naßzerkleinerungsaggregaten homogenisiert.

10. Verwendung der wäßrigen Pigmentpräparationen nach Anspruch 1 zum Pigmentieren natürlicher oder synthetischer Materialien.

11. Verwendung der wäßrigen Pigmentpräparationen nach Anspruch 1 zum Einfärben von Papier in der Masse, Non-Woven, Folien sowie Papierstreichfarben.

12. Verwendung der wäßrigen Pigmentpräparationen nach Anspruch 1, zum Pigmentieren von wäßrigen Lacksystemen, insbesondere Polyacrylat-, Polyesteroder Polyurethansystemen sowie zum Einfärben von Dispersionsanstrichfarben und zur Herstellung von wäßrigen Druckfarben.

13. Verwendung der wäßrigen Pigmentpräparationen nach Anspruch 1 zum Pigmentieren für den Ink-Jet-Druck.

## Claims

1. Aqueous pigment preparations comprising
a) at least one pigment,
b) at least one condensation product based on
A) sulphonated aromatics,
B) aldehydes and/or ketones and optionally
C) one or more compounds selected from the group consisting of unsulphonated aromatics, urea and urea derivatives, and
c) at least one polyetherpolyol having an atmospheric pressure boiling point of greater than 250°C.

2. Aqueous pigment preparations according to Claim 1, comprising as component b) at least one condensation product based on
A) at least one sulphonated aromatic selected from the group consisting of naphthalenesulphonic acids, phenolsulphonic acids, dihydroxybenzenesulphonic acids, sulphonated ditolyl ethers, sulphomethylated 4,4'-dihydroxydiphenyl sulphone, sulphonated diphenylmethane, sulphonated biphenyl, sulphonated hydroxybiphenyl, especially 2-hydroxybiphenyl, sulphonated terphenyl and benzenesulphonic acids,
B) formaldehyde and optionally
C) one or more compounds selected from the group consisting of phenol, cresol, 4,4'-dihydroxydiphenyl sulphone, dihydroxydiphenylmethane, urea, dimethylolurea, melamine and guanidine.

3. Aqueous pigment preparations according to Claim 1, **characterized in that** the condensation product of component b) has an average degree of condensation of 1 to 150, especially 1 to 20, preferably 1 to 5.

4. Aqueous pigment preparations according to Claim 1, **characterized in that** the residual monomer content of the condensation product of component b) is less than 30% by weight, preferably less than 20% by weight, especially less than 10% by weight, based on the condensation product.

5. Aqueous pigment preparations according to Claim 1, comprising
- 2 to 70%, especially 10 to 50%, by weight of pigment of component a), especially of organic pigment, based on the preparation,
- 0.1 to 120%, especially 0.2 to 60%, by weight of condensation product of component b), based on pigment of component a),
- 1 to 30%, preferably 2 to 20%, by weight of polyetherpolyol of component c), based on the preparation, and also
- 29 to 97% by weight of water, based on the preparation.

6. Aqueous pigment preparations according to Claim 1, comprising as component c) homo-, co- or block-copolyetherpolyols prepared by reacting ethylene oxide and/or propylene oxide with water or with low molecular weight alcohols having at least two hydroxyl groups, especially those selected from the group consisting of ethylene glycol, 1,2- or 1,3-propanediol, 1,2- or 1,4-butanediol, hexanediol, glycerol and pentaerythritol, or with low molecular weight amines bearing at least two amino groups having reactive hydrogen atoms, especially those selected from the group consisting of ethylenediamine and diethylenetriamine.

7. Aqueous pigment preparations according to Claim 1, further comprising a component d) comprising a nonionic or anionic dispersant selected from the group consisting of
d1) sulphosuccinic esters, alkylbenzenesulphonates and sulphated alkoxylated fatty acid alcohols or salts thereof and/or
d2) ligninsulphonates from the sulphite and kraft process and/or
d3) alkoxylation products and/or their esters obtained by the addition of optionally substituted styrenes to optionally substituted phenols and reaction with ethylene oxide and/or propylene oxide.

8. Aqueous pigment preparation according to Claim 1, **characterized in that** component a) is a pigment from the group of the azo metal complex pigments of the formula (III) 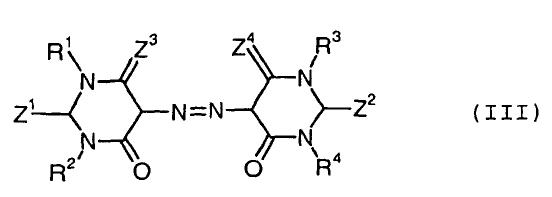 where
R¹, R², R³ and R⁴ are independently hydrogen, alkyl, especially C₁-C₆-alkyl, cycloalkyl, especially C₅-C₈-cycloalkyl, aryl, especially optionally substituted phenyl, aralkyl, especially C₆-C₁₀-aryl-C₁-C₄-alkyl, such as benzyl or ethylphenyl, or hetaryl,
Z¹ to Z⁴ are independently O or NR⁵, and
R⁵ is hydrogen or cyano,
preferably of the formulae IV and V 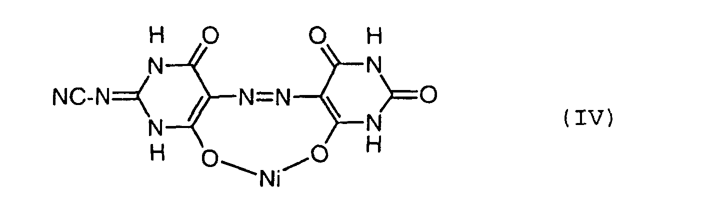 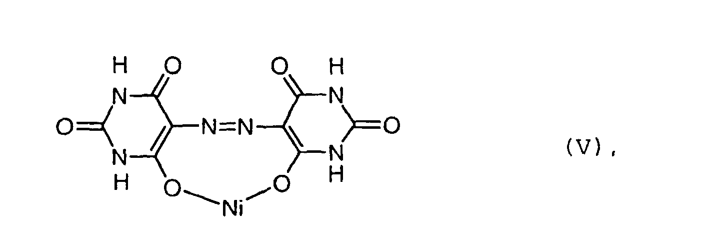 in the form of a salt, complex, solid solution, inclusion or intercalation compound, in which case the included compound is preferably a cyclic or acyclic compound, preferably carboxylic or sulphonic acid amides, urea or substituted ureas and also heterocycles, especially 2,4,6-triamino-1,3,5-triazine, acetoguanamine and benzoguanamine.

9. Process for preparing the aqueous pigment preparations of Claim 1, **characterized in that** the individual ingredients of the preparation are homogenized together with water in wet comminutors.

10. The use of the aqueous pigment preparations of Claim 1 for pigmenting natural or synthetic materials.

11. The use of the aqueous pigment preparations of Claim 1 for colouring paper in the pulp, nonwovens, film/sheet and paper coating materials.

12. The use of the aqueous pigment preparations of Claim 1 for pigmenting aqueous coating systems, especially polyacrylate, polyester or polyurethane systems, and also for colouring emulsion paints and for producing aqueous printing inks.

13. The use of the aqueous pigment preparations of Claim 1 for pigmenting for ink-jet printing.

## Revendications

1. Préparations pigmentaires aqueuses contenant
a) au moins un pigment,
b) au moins un produit de condensation sur la base de
A) des aromatiques sulfonés,
B) des aldéhydes et/ou des cétones et éventuellement
C) un ou plusieurs composés, choisis dans le groupe des aromatiques non sulfonés, de l'urée et des dérivés d'urée et
c) au moins un polyétherpolyol avec un point d'ébullition à la pression normale supérieur à 250°C.

2. Préparations pigmentaires aqueuses selon la revendication 1, contenant comme composant b) au moins un produit de condensation à base de
A) au moins un aromatique sulfoné choisi dans le groupe des acides naphtalènesutfoniques, des acides phénolsulfoniques, des acides dihydroxybenzènesulfoniques, l'éther de ditolyle sulfoné, la 4,4'-dihydroxydiphénylsulfone sulfométhylée, le diphénylméthane sulfoné, le biphényle sulfoné, l'hydroxybiphényle sulfoné, en particulier le 2-hydroxybiphényle, le terphényle sulfoné et les acides benzènesulfoniques,
B) le formaldéhyde et éventuellement
C) un ou plusieurs composés, choisis dans le groupe constitué par le phénol, le crésol, la 4,4'-dihydroxydiphénylsulfone, le dihydroxydiphénylméthane, l'urée, la diméthylolurée, la mélamine et la guanidine.

3. Préparations pigmentaires aqueuses selon la revendication 1, **caractérisées en ce que** le produit de condensation du composant b) possède un degré de condensation moyen de 1 à 150, en particulier 1 à 20, de préférence 1 à 5.

4. Préparations pigmentaires aqueuses selon la revendication 1, **caractérisées en ce que** la quantité de monomères restants du produit de condensation du composant b) est inférieure à 30% en poids, de préférence inférieure à 20% en poids, en particulier inférieure à 10% en poids, rapporté au produit de condensation.

5. Préparations pigmentaires aqueuses selon la revendication 1, contenant
- 2 à 70, en particulier 10 à 50% en poids d'un pigment du composant a), en particulier un pigment organique, rapporté à la préparation,
- 0,1 à 120, en particulier 0,2 à 60% en poids du produit de condensation du composant b), rapporté au pigment du composant a),
- 1 à 30, de préférence 2 à 20% en poids de polyétherpolyol du composant c), rapporté à la préparation ainsi que
- 29 à 97% en poids d'eau, rapporté à la préparation.

6. Préparations pigmentaires aqueuse selon la revendication 1, contenant comme composant c) des polyétherpolyols homopolymères, copolymères ou copolymères séquencés qui sont préparés par réaction d'oxyde d'éthylène et/ou d'oxyde de propylène avec de l'eau ou des alcools de faible masse moléculaire, qui possèdent au moins deux groupes hydroxy en particulier ceux choisis dans le groupe de l'éthylèneglycol, le 1,2- ou le 1,3-propanediol, le 1,2- ou le 1,4-butanediol, l'hexanediol, la glycérine ou le pentaérythritol ou avec des amines de faibles masse moléculaire, qui portent au moins deux groupes amino avec des atomes d'hydrogène réactifs, choisies dans le groupe de l'éthylènediamine et de la diéthylènetriamine.

7. Préparations pigmentaires aqueuses selon la revendication 1, contenant en outre un dispersant non ionogène ou anionogène du composant d) choisi dans le groupe de
d1) des esters d'acide sulfosuccinique, des alkylbenzènesulfonates et des alcools d'acide gras alcoxylés, sulfatés, ou leurs sels et/ou
d2) des ligninesulfonates selon le procédé au sulfite et le procédé kraft et/ou
d3) des produits d'oxyalkylation et/ou leurs esters qui sont obtenus par juxtaposition de styrènes éventuellement substitués sur des phénols éventuellement substitués et réaction avec l'oxyde d'éthylène et/ou l'oxyde de propylène.

8. Préparation aqueuse selon la revendication 1, **caractérisée en ce que** le composant a) est un pigment du groupe des pigments complexes azoïques-métalliques de formule (III) 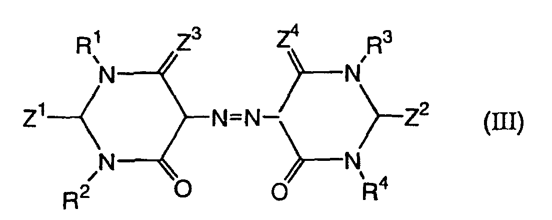
dans laquelle R¹, R², R³ et R⁴, indépendamment l'un de l'autre sont l'hydrogène, un groupe alkyle, en particulier alkyle en C₁-C₆, cycloalkyle, en particulier cycloalkyle en C₅-C₈, aryle, en particulier phényle éventuellement substitué, aralkyle, en particulier aryl en C₆-C₁₀ alkyle en C₁-C₄, comme le benzyle ou l'éthylphényle, ou l'hétaryle,
Z¹ à Z⁴ indépendamment l'un de l'autre sont O ou NR⁵ et
R⁵ est l'hydrogène ou un groupe cyano,
de préférence de formules IV et V 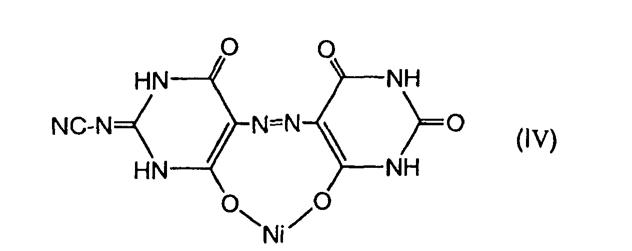 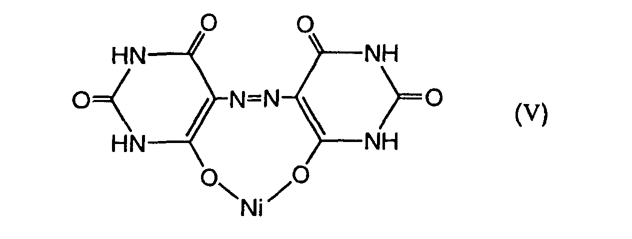 sous forme d'un sel, complexe, comme solution solide, comme composé d'inclusion ou composé d'intercalation, le composé enfermé étant de préférence un composé cyclique ou non cyclique, de préférence un amide d'acide carboxylique ou un amide d'acide sulfonique, l'urée ou des urées substituées, ainsi que des hétérocycles, en particulier la 2,4,6-triamino-1,3,5-triazine, l'acétoguanamine et la benzoguanamine.

9. Procédé se préparation des préparations pigmentaires aqueuses selon la revendication 1, **caractérisé en ce qu'**on homogénéise ensemble les composants unitaires de la préparation avec de l'eau dans un dispositif de broyage à l'état humide.

10. Utilisation des préparations pigmentaires aqueuses selon la revendication 1 pour la pigmentation de matériaux naturels ou synthétiques.

11. Utilisation des préparations pigmentaires aqueuses selon la revendication 1 pour la coloration de papier en masse, de non tissé, de feuilles ainsi que le couchage de papier.

12. Utilisation des préparations pigmentaires aqueuses selon la revendication 1 pour la pigmentation de systèmes de laque aqueux, en particulier de systèmes de polyacrylate, de polyester ou de polyuréthane ainsi que pour la coloration de peinture en dispersion et pour la préparation d'encres d'impression aqueuses.

13. Utilisation des préparations pigmentaires aqueuses selon la revendication 1 pour la pigmentation pour l'impression par jet d'encre.
